# EUROPÄISCHE PATENTSCHRIFT

(11) **EP 1 024 618 B1**
(45) Veröffentlichungstag und Bekanntmachung des Hinweises auf die Patenterteilung: **24.05.2006**
(21) Anmeldenummer: 00101508.0
(22) Anmeldetag: 26.01.2000
(51) Int. Cl.: H04J 3/06, H04L 7/033

(54) **Anordnung zur Synchronisierung zumindest einer abgesetzten Baugruppe mit einer zentralen Baugruppe**
Device for synchronising at least one remote module with a central module
Dispositif pour la synchronisation d'au moins un ensemble électronique à distance par un ensemble électronique central

(30) Priorität: 26.01.1999 DE 19903016
(43) Veröffentlichungstag der Anmeldung: 02.08.2000
(73) Patentinhaber: SIEMENS AKTIENGESELLSCHAFT, 80333 München (DE)
(72) Erfinder: Dauerer, J-rg, 82194 Gr-benzell (DE); Gardijan, Zoran, 81739 M-nchen (DE); Steib, Gerhard, 81545 M-nchen (DE)

(56) Entgegenhaltungen:
- DE-A1- 4 332 999
- US-A- 5 661 700

## Beschreibung

Die Erfindung betrifft eine Anordnung zur Synchronisierung zumindest einer abgesetzten Baugruppe mit einer zentralen Baugruppe, insbesondere in einer Basisstation eines Funk-Kommunikationssystems.

Basisstationen eines Funk-Kommunikationssystems nach dem Stand der Technik, wie beispielsweise für das unter anderem aus J. Eberspächer, H.J. Vögel, "GSM Global System for Mobile Communication", B.G. Teubner, 1997, bekannte GSM-Mobilfunksystem (Global System for Mobile Communications), sind in der Regel modular aufgebaut. Diese Modularität ist in der Weise realisiert, daß die Basisstation eine Zentraleinheit und mehrere Sende/Empfangseinrichtungen (carrier unit) beispielsweise für unterschiedliche Trägerfrequenzen aufweist. Die Zentraleinheit und die Sende/Empfangseinrichtungen sind dabei beispielsweise über ein Bussystem oder über eine sternförmige Struktur von individuellen Leitungen, wie sie aus der älteren nationalen Patentanmeldung DE 197 55 379.6 bekannt ist, verbunden, so daß sich für den Fall der sternförmigen Struktur zwischen der Zentraleinheit und jeder einzelnen Sende/Empfangseinrichtung eine Punkt-zu-Punkt-Verbindung für eine Informationsübertragung ergibt.

Um eine Synchronität der Baugruppen entsprechend den Anforderungen des Funk-Kommunikationssystems zu gewährleisten, können die Sende/Empfangseinrichtungen beispielsweise mit allen benötigten Rahmen- und Taktsignalen von der Zentraleinheit versorgt werden. Weiterhin ist eine Synchronisierung mittels eines GPS-Empfängers denkbar. Diese beiden Lösungen besitzen jedoch den Nachteil einer komplexen bzw. kostenintensiven Realisierung.

Aus DE 43 32 999 A1 ist ein Verfahren zum Erzeugen eines Systemtakts in Basisstationen eines mehrzellularen drahtlosen Fernsprechsystems bekannt. Dabei sind an einem so genannten Kommunikationssystem terrestrische Basisstationen angeschlossen. Im Kommunikationssystem werden hochgenaue Kommunikationssystemtakte bzw. Übertragungstakte gebildet, auf die terrestrisch zu den Basisstationen übermittelte Übertragungssignale synchronisiert werden. In den Basisstationen wird aus empfangenen Übertragungssignalen ein Übertragungstakt abgeleitet und ein synchronisierbarer Systemtaktgenerator synchronisiert.

Der Erfindung liegt die Aufgabe zugrunde, eine Anordnung anzugeben, die eine Synchronisierung von abgesetzten Baugruppen ohne zentrale Taktsignalversorgung ermöglicht. Diese Aufgabe wird durch die Anordnung gemäß den Merkmalen des unabhängigen Patentanspruchs gelöst. Weiterbildungen der Erfindung sind den Unteransprüchen zu entnehmen.

Erfindungsgemäß weist die Anordnung eine zentrale Baugruppe mit einer Einrichtung zum Erzeugen eines Systemtaktsignals sowie einer erste Zähleinrichtung zum periodischen Erzeugen eines Synchronisierungsimpulses aus dem Systemtaktsignal auf, die den Synchronisierungsimpuls mit einer Periodizität erzeugt, die einem ganzzahligen gemeinsamen Teiler einer Periodizität des Systemtaktsignals und einer Periodizität eines in der abgesetzten Baugruppe erzeugten lokalen Taktsignals entspricht. Weiterhin weist die Anordnung eine abgesetzte Baugruppe mit einer Einrichtung zum Erzeugen des lokalen Taktsignals sowie einer Synchronisierungseinrichtung zum Ermitteln einer jeweiligen Differenz zwischen einer Zeitlage des empfangenen Synchronisierungsimpulses und einer Zeitlage des lokalen Taktsignals sowie zum Steuern der Zeitlage des lokalen Taktsignals im Verhältnis zu der Zeitlage des Synchronisierungsimpulses auf. Eine Übertragung von Informationen und des Synchronisierungsimpulses von der zentralen Baugruppe zu der abgesetzten Baugruppe erfolgt mittels einer ersten bzw. zweiten Schnittstelleneinrichtung und zumindest einer Verbindungsleitung.

Durch diese erfindungsgemäße Ausgestaltung kann das benötigte Taktsignal lokal in der abgesetzten Baugruppe erzeugt und periodisch durch den Synchronisierungsimpuls auf das zentrale Taktsignal der zentralen Baugruppe synchronisiert werden. Bei einer Synchronisierung von lokalen Taktsignalen mehrerer abgesetzter Baugruppen ist vorteilhafterweise keine jeweils identische Länge der Verbindungsleitung zu den abgesetzten Baugruppen notwendig. Vorteilhaft wird durch die lokale Erzeugung der benötigten Taktsignale weiterhin die Anzahl der Verbindungsleitungen zu den abgesetzten Baugruppen verringert.

Gemäß zweier alternativer Weiterbildungen der Erfindung steuert die Synchronisierungseinrichtung die Zeitlage des lokalen Taktsignals derart, daß die Differenz minimal ist, oder die Differenz abhängig von einer Länge der Verbindungsleitung konstant ist. Mittels der ersten alternativen Weiterbildung wird das lokale Taktsignal direkt mit dem zentralen Taktsignal synchronisiert, während mittels der zweiten alternativen Weiterbildung das lokale Taktsignal einer Länge der Verbindungsleitung angepaßt werden kann, wodurch beispielsweise für den Fall mehrerer mit der zentralen Baugruppe verbundener abgesetzter Baugruppen die jeweiligen lokalen Taktsignale auf den abgesetzten Baugruppen untereinander synchronisiert werden können.

Einer weiteren Ausgestaltung der Erfindung zufolge führt die Synchronisierungseinrichtung den Vergleich der Zeitlagen nur in bestimmten Zeitintervallen durch. Hierdurch wird vorteilhaft eine Desynchronisierung vermieden.

Gemäß einer weiteren Weiterbildung der Erfindung weist die zentrale Baugruppe eine zweite Zähleinrichtung zum periodischen Erzeugen eines aus einer jeweiligen Anzahl von Informationselementen bestehenden internen Zeitrahmens auf. In diesem Zeitrahmen wird die Informationsübertragung zu der abgesetzten Baugruppe durchgeführt. Hierdurch wird Kompatibilität zu beispielsweise einem Übertragungsformat von mit der zentralen Baugruppe verbundenen Einrichtungen ermöglicht. Für den in der Einleitung beispielhaft genannten Fall einer Basisstation eines Funk-Kommunikationssystems können durch die Erzeugung von internen Zeitrahmen Informationsblöcke entsprechend dem netzseitigen PCM-Übertragungsprotokoll zu den abgesetzten Baugruppen übertragen werden. Weiterhin wird durch eine beispielhafte Integration des Synchronisierungsimpulses in den Datenstrom der Informationsübertragung vorteilhaft die zusätzliche Belastung der Verbindungsleitung gering gehalten.

Der Synchronisierungsimpuls kann gemäß einer Weiterbildung der vorangehenden Ausgestaltung periodisch nach jeweils einer bestimmten Anzahl erzeugter interner Zeitrahmen erzeugt werden.

Weiterhin kann gemäß einer weiteren Weiterbildung eine dritte Zähleinrichtung in der zentralen Baugruppe verwirklicht sein, die die erzeugten internen Zeitrahmen zählt und jeweils einer internen Zeitrahmennummer zuordnet.

Sowohl der Synchronisierungsimpuls als auch die interne Zeitrahmennummer können entsprechend einer weiteren Ausgestaltung der erfindungsgemäßen Anordnung gemeinsam zu der abgesetzten Baugruppe übertragen werden, wobei sie beispielsweise eine Anzahl Informationselemente eines internen Zeitrahmens ersetzen.

Eine in der abgesetzten Baugruppe verwirklichte vierte Zähleinrichtung erzeugt gemäß einer weiteren Weiterbildung Zeitschlitze in Abhängigkeit von der Periodizität des lokalen Taktsignals. Diese Zeitschlitze weisen eine jeweilige Anzahl von Informationselementen auf und dienen einer Informationsübertragung zu zumindest einer weiteren externen Einrichtung. Für den beispielhaften Fall eines eingangs beschriebenen Funk-Kommunikationssystems wird in der vierten Zähleinrichtung die Dauer eines Zeitschlitzes gemäß dem TDMA-Teilnehmerseparierungsverfahren für die Informationsübertragung zu beispielsweise einer Mobilstation des GSM-Mobilfunksystems gesteuert.

Weiterhin kann gemäß einer weiteren Weiterbildung der Erfindung eine ebenfalls in der abgesetzten Baugruppe verwirklichte fünfte Zähleinrichtung aus einer bestimmten Anzahl Zeitschlitze einen externen Zeitrahmen erzeugen. Dieser externe Zeitrahmen legt wiederum für den beispielhaften Fall eines Funk-Kommunikationssystems mit einem TDMA-Teilnehmerseparierungsverfahren die Periodizität für die Informationsübertragung zu den einzelnen Mobilstationen fest, wobei beispielsweise jeweils einer Mobilstation ein Zeitschlitz für die Informationsübertragung zugeordnet ist. Der Erzeugung der Zeitschlitze sowie der externen Zeitrahmen kann alternativ auch mittels einer einzigen Zähleinrichtung erfolgen.

Einer weiteren Ausgestaltung der Erfindung zufolge weist die abgesetzte Baugruppe eine sechste Zähleinrichtung auf, die die erzeugten externen Zeitrahmen zählt und jeweils einer externen Zeitrahmennummer zuordnet.

Die zu der externen Baugruppe übertragene interne Zeitrahmennummer kann entsprechend einer weiteren Weiterbildung in einer Recheneinrichtung in der abgesetzten Baugruppe mit der externen Zeitrahmennummer verglichen und eine Differenz der jeweiligen Zeitrahmennummern ermittelt werden. Ausgehend von der ermittelten Differenz wird die externe Zeitrahmennummer im Verhältnis zu der zentralen Zeitrahmennummer, beispielsweise hinsichtlich einer Minimierung der Differenz, verändert. Durch diese Ausgestaltung kann neben einer Synchronisierung von Zeitlagen vorteilhaft eine zusätzliche Synchronisierung von jeweiligen Zähleinrichtungen für die jeweilige Informationsübertragung erfolgen.

In der Recheneinrichtung kann gemäß einer weiteren Weiterbildung aus der internen Zeitrahmennummer entsprechend dem Verhältnis zwischen der Periodizität der Erzeugung der internen Zeitrahmen und der Periodizität der Erzeugung der externen Zeitrahmen eine theoretische externe Zeitrahmennummer berechnet werden. Diese theoretische externe Zeitrahmennummer vergleicht die Recheneinrichtung mit der in der sechsten Zähleinrichtung ermittelten externen Zeitrahmennummer. Bei Auftreten einer Differenz zwischen den Zeitrahmennummern ordnet die Recheneinrichtung entsprechend einer weiteren Ausgestaltung der externen Zeitrahmennummer die berechnete theoretische externe Zeitrahmennummer zu. Durch diese Berechnung in der Recheneinrichtung ist ein direkter Vergleich der Zeitrahmennummern möglich, obwohl die Zeitrahmen jeweils mit einem unterschiedlichen Taktsignal erzeugt werden.

Die Erfindung wird nun anhand von zeichnerischen Darstellungen näher erläutert. Dabei zeigen
- FIG 1: ein Blockschaltbild eines Funk-Kommunikationssystems, insbesondere eines Mobilfunksystems,
- FIG 2: ein Blockschaltbild einer erfindungsgemäßen Anordnung zur Synchronisation,
- FIG 3: ein der Anordnung in der FIG 2 entsprechendes Blockschaltbild mit einer zusätzlichen Zeitrahmensynchronisierung, und
- FIG 4: ein auf der Anordnung der FIG 3 basierendes Zeitdiagramm für die temporären Relationen der einzelnen Zähleinrichtungen.

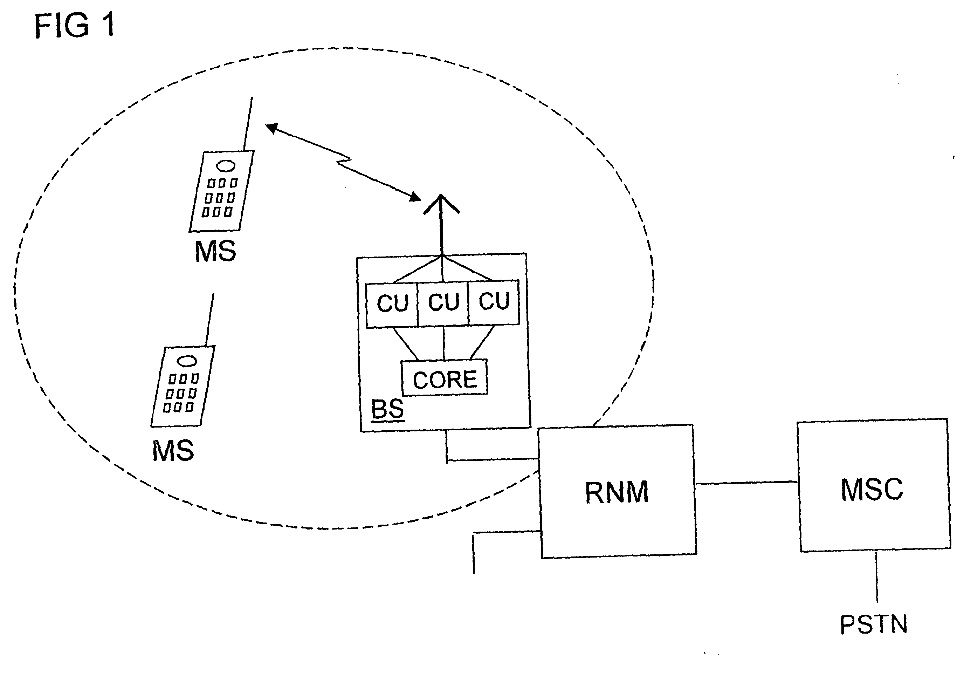

Das in FIG 1 dargestellte und beispielhaft als ein Mobilfunksystem ausgestaltete Funk-Kommunikationssystem entspricht in seiner Struktur einem bekannten GSM-Mobilfunksystem oder UMTS-Mobilfunksystem, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einer Einrichtung zur Zuweisung funktechnischer Ressourcen RNM verbunden. Jede dieser Einrichtungen RNM ermöglicht wiederum eine Verbindung zu zumindest einer Basisstation BS. Diese Basisstation BS ist eine Funkstation, die über eine Funkschnittstelle Kommunikationsverbindungen zu Mobilstationen MS aufbauen und auslösen kann.

In FIG 1 ist beispielhaft eine Kommunikationsverbindung zur Informationsübertragung zwischen einer Basisstation BS und einer Mobilstation MS dargestellt. In dem Funkversorgungsgebiet der Basisstation BS befindet sich eine weitere Mobilstation MS, die in dem dargestellten Fall keine Kommunikationsverbindung aufgebaut hat.

Im weiteren wird nur die Struktur der Basisstation BS mit einer zentralen Baugruppe CORE und einer abgesetzten Baugruppe CU betrachtet, wobei die Basisstation BS zum Senden und Empfangen von mehreren Trägern unterschiedlicher Frequenzen im Regelfall eine zentrale Baugruppe CORE und mehrere als Sende/Empfangseinrichtungen CU (carrier unit) ausgestaltete abgesetzte Baugruppen enthält. Die zentrale Baugruppe CORE und die Sende/Empfangseinrichtungen CU sind über eine sternförmige Struktur von individuellen Verbindungsleitungen CC-LINK verbunden, so daß sich jeweils eine Punkt-zu-Punkt-Verbindung für eine Informationsübertragung ergibt.

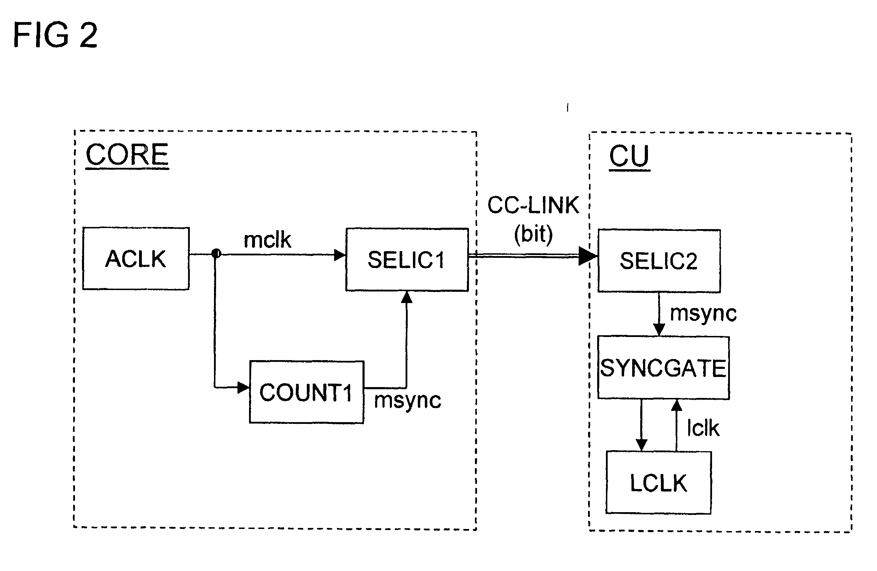

Die FIG 2 zeigt ein Blockschaltbild einer zentralen Baugruppe CORE und einer Sende/Empfangseinrichtung CU, die jeweils eine erste SELIC1 bzw. zweite Schnittstelleneinrichtung SELIC2 für eine Punkt-zu-Punkt-Verbindung über eine Verbindungsleitung CC-LINK aufweisen. Entsprechend einer nicht eingezeichneten Ausgestaltung können die Schnittstelleneinrichtungen SELIC1, SELIC2 und die Verbindungsleitung CC-LINK jeweils doppelt in den Baugruppen verwirklicht sein, wodurch durch einfaches Umschalten auch im Falle eines teilweisen Ausfalls die ordnungsgemäße Funktion der Basisstation BS sichergestellt wird.

Die zentrale Baugruppe CORE enthält neben den angebenen Komponenten eine Einrichtung zum Anschluß an die Abis-Schnittstelle zur Einrichtung RNM zur Zuteilung funktechnischer Ressourcen. Hierdurch ist die Verbindung gemäß einer PCM30 oder PCM24-Übertragung und eine Umsetzung in das entsprechende Rahmenprotokoll gewährleistet.

Von der Einrichtung RNM zur Zuteilung funktechnischer Ressourcen bzw. von Netzseite kommende Informationen, die zu einer Mobilstation MS gesendet werden sollen, werden von der Abis-Schnittstelle transparent über die Schnittstelleneinrichtungen SELIC1, SELIC2 und die Verbindungsleitung CC-LINK zu der der Sende/Empfangseinrichtung CU übertragen, in der nachfolgend eine Signalverarbeitung und Wandlung erfolgt.

Eine Einrichtung ACLK in der zentralen Baugruppe CORE erzeugt ein unabhängiges hochgenaues Systemtaktsignal mclk bzw. leitet das Systemtaktsignal mclk beispielsweise mittels eines Oszillatorschaltkreises aus dem netzseitigen PCM-Taktsignal ab. Dieses Systemtaktsignal mclk dient unter anderem beispielsweise der Steuerung der Schnittstelleneinrichtungen SELIC1, SELIC2. Entspricht das Systemtaktsignal mclk dem PCM-Taktsignal, so kann eine transparente Informationsübertragung zu der Sende/Empfangseinrichtung CU erfolgen.

Aus dem Systemtaktsignal mclk wird in einer ersten Zähleinrichtung COUNT1 in der zentralen Baugruppe CORE die Anzahl der Zustandswechsel ermittelt und bei einem jeweiligen Überlauf bzw. bei einem Erreichen eines bestimmten Zählerstands der ersten Zähleinrichtung COUNT1 ein Synchronisierungsimpuls msync erzeugt. Die erste Zähleinrichtung COUNT1 besitzt dabei beispielsweise eine bestimmte Periodizität für die Erzeugung des Synchronisierungsimpulses msync, die von der Zählbreite der ersten Zähleinrichtung COUNT1 abhängt. Der generierte Synchronisierungsimpuls msync wird über die Verbindungsleitung CC-LINK zu der Sende/Empfangseinrichtung CU übertragen und in dieser einer Synchronisierungseinrichtung SYNCGATE zugeführt. In der Sende/Empfangseinrichtung CU wird in einer Einrichtung LCLK ein lokales Taktsignal lclk erzeugt, das beispielsweise die Erzeugung von luftschnittstellenspezifischen Parametern steuert. Das lokale Taktsignal lclk besitzt dabei eine unterschiedliche Frequenz zu dem Systemtaktsignal mclk. Um die jeweiligen Zeitlagen des Synchronisierungsimpulses msync und des lokalen Taktsignals lclk vergleichen zu können, wird die Periodizität der Erzeugung des Synchronisierungsimpulses msync so gewählt, daß sie einem ganzzahligen gemeinsamen Teiler der Periodizität des Systemtaktsignals und der Periodizität des lokalen Taktsignals lclk entspricht. Ist diese Bedingung gegeben, so kann in der Synchronisierungseinrichtung SYNCGATE die Zeitlage des lokalen Taktsignals lclk der Zeitlage des Systemtaktes mclk angepaßt werden. Für diese Anpassung kann ebenso die Länge der Verbindungsleitung CC-LINK berücksichtigt werden, wobei abhängig von dieser Länge die Differenz zwischen den Zeitlagen einem bestimmten Wert angeglichen wird.

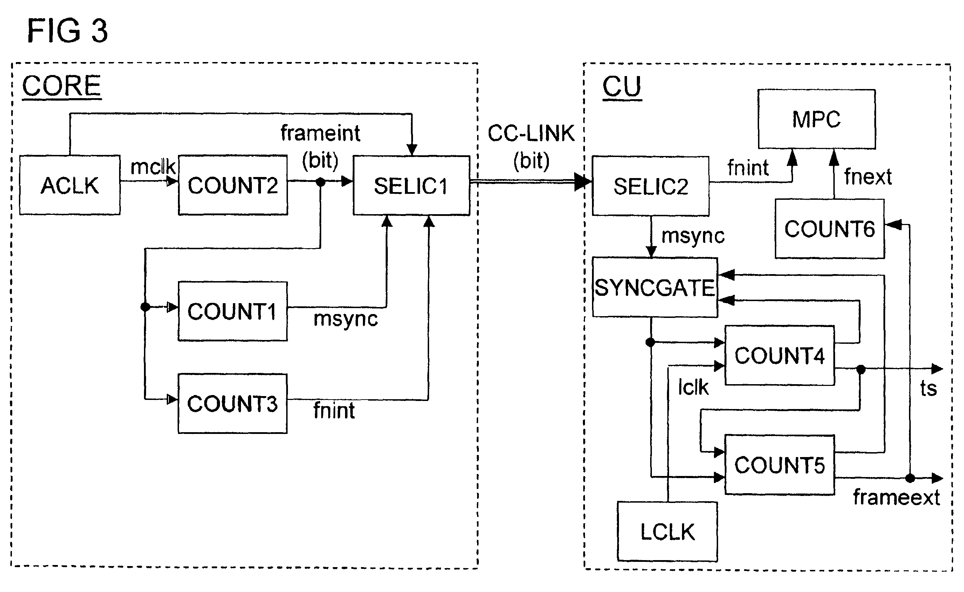

In der FIG 3 ist ein erweitertes Blockschaltbild einer zentralen Baugruppe CORE und einer damit verbundenen Sende/Empfangseinrichtung CU dargestellt. In der zentralen Baugruppe CORE werden aus dem Systemtaktsignal mclk in einer zweiten Zähleinrichtung COUNT2 interne Zeitrahmen frameint abgeleitet, die jeweils eine bestimmte Anzahl von Informationselementen bit aufnehmen können. Die Länge der internen Zeitrahmen frameint kann dabei beispielsweise der Rahmenlänge des netzseitigen PCM-Signals entsprechen, wodurch wiederum eine transparente Informationsübertragung zu der Sende/Empfangseinrichtung CU gegeben ist. Die erste Zähleinrichtung COUNT1 zählt in dieser Ausgestaltung nicht die Zustandswechsel des Systemtaktsignals mclk, sondern die Anzahl der erzeugten internen Zeitrahmen frameint. Nach einer bestimmten Anzahl interner Zeitrahmen frameint erzeugt die erste Zähleinrichtung COUNT1 wiederum periodisch einen Synchronisierungsimpuls msync. Parallel zu der ersten Zähleinrichtung COUNT1 ist in der zentralen Baugruppe CORE eine dritte Zähleinrichtung COUNT3 verwirklicht, die die erzeugten internen Zeitrahmen frameint zählt und jeweils einer internen Zeitrahmennummer fnint zuordnet. Die erste COUNT1 und die dritte Zähleinrichtung COUNT3 können gemäß einer nicht dargestellten alternativen Ausführungsform auch in einer gemeinsamen Zähleinrichtung verwirklicht sein. Beispielsweise gemeinsam mit dem Synchronisationsimpuls msync wird die jeweils aktuelle Zeitrahmennummer fnint zu der Sende/Empfangseinrichtung CU übertragen. Zur Übertragung des Synchronisierungsimpulses msync sowie der aktuellen internen Zeitrahmennummer fnint erfolgt beispielsweise durch Ersetzen einer jeweils benötigten Anzahl von Informationselementen bit durch diese beiden Werte.

In der Sende/Empfangseinrichtung CU wird die aktuelle Zeitrahmennummer fnint beispielsweise in einer Speichereinrichtung in der zweiten Schnittstelleneinrichtung SELIC2 zwischengespeichert. Das lokale Taktsignal lclk, das beispielsweise mittels einer analogen PLL-Schaltung aus dem Systemtaktsignal mclk gewonnen wird, dient einer vierten Zähleinrichtung COUNT4 zur Erzeugung von Zeitschlitzen ts für eine Informationsübertragung zu beispielsweise einer Mobilstation MS entsprechend einem aus dem GSM-Mobilfunksystem bekannten TDMA-Teilnehmerseparierungsverfahren. Ein Zeitschlitz ts beinhaltet jeweils eine bestimmte Anzahl von Informationselementen bit, in die die netzseitigen Informationen transformiert und mit einer Trainingssequenz zur Kanalschätzung versehen werden. Gemäß dem TDMA-Verfahren ergibt eine bestimmte Anzahl Zeitschlitze ts einen externen Zeitrahmen frameext, so werden beispielsweise in dem GSM-Mobilfunksystem acht Zeitschlitze ts zu einem externen Zeitrahmen fnext zusammengefaßt, wodurch gleichzeitig Kommunikationsverbindungen zu maximal acht Mobilstationen MS aufgebaut werden können. Die Erzeugung der externen Zeitrahmen frameext erfolgt in einer fünften Zählschaltung COUNT5, die die in der vierten Zähleinrichtung COUNT4 erzeugten Zeitschlitze ts zählt. Wiederum können die vierte COUNT4 und die fünfte Zähleinrichtung COUNT5 alternativ in einer gemeinsamen Zähleinrichtung verwirklicht sein.

In der Synchronisierungseinrichtung SYNCGATE in der Sende/Empfangseinrichtung CU werden jeweils die Zeitlagen der erzeugten Zeitschlitze ts bzw. der externen Zeitrahmen frameext mit der Zeitlage des Systemtaktsignals mclk verglichen und bei einer auftretenden Differenz diese wie zu der FIG 2 beschrieben ausgeregelt.

Neben dem Vergleich von Zeitlagen zur Synchronisierung der Sende/Empfangseinrichtung CU mit der zentralen Baugruppe CORE werden in einer sechsten Zähleinrichtung COUNT6 in der Sende/Empfangseinrichtung CU die erzeugten externen Zeitrahmen frameext gezählt und einer externen Zeitrahmennummer fnext zugeordnet. Diese externe Zeitrahmennummer fnext wird ebenso wie die interne Zeitrahmennummer fnint beispielsweise bei Auftreten eines Synchronisierungsimpulses msync einer Recheneinrichtung MPC in der Sende/Empfangseinrichtung CU zugeführt. Die Recheneinrichtung MPC kann nun aus dem bekannten Verhältnis zwischen den Zeitrahmennummern eine Abweichung feststellen und beispielsweise die externe Zeitrahmennummer fnext entsprechend der internen Zeitrahmennummer fnint anpassen. Die sechste Zähleinrichtung COUNT6 bzw. dessen Funktion kann zur weiteren Integration in der Recheneinrichtung MPC verwirklicht bzw. von dieser übernommen werden.

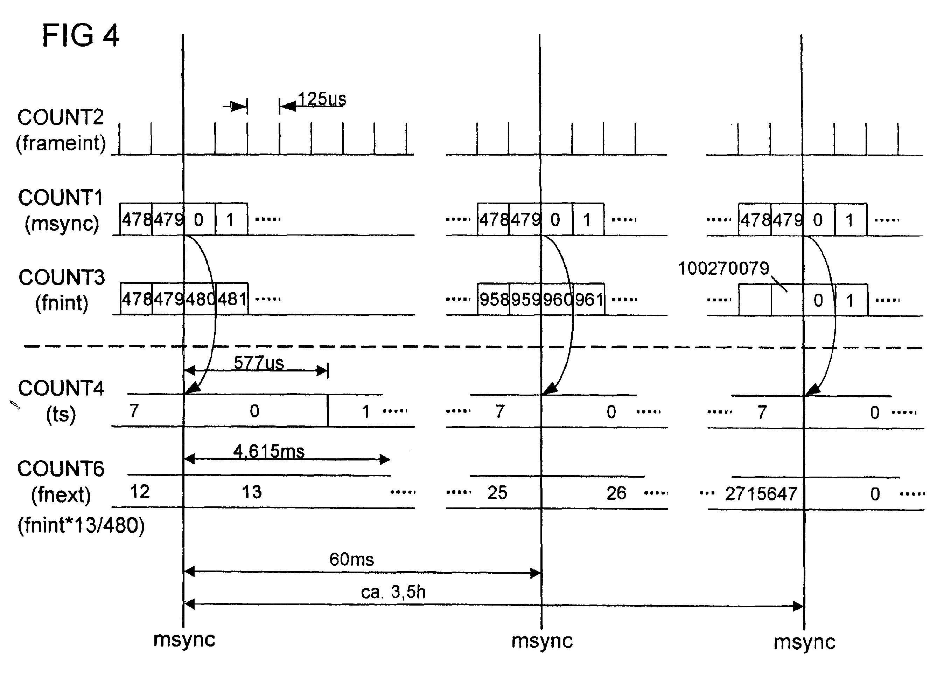

In der FIG 4 ist ein Zeitdiagramm für die einzelnen Zähleinrichtungen aus der FIG 3 dargestellt. Dieses Zeitdiagramm zeigt die Synchronisierung von Zeitlagen der Taktsignale und von Zeitrahmen unterschiedlicher Periodizität. Beispielhaft sind Periodizitäten angenommen, wie in einer Basisstation BS eines GSM-Mobilfunksystems auftreten.

In der Einrichtung ACLK in der zentralen Baugruppe CORE wird ein Systemtaktsignal mclk mit einer Frequenz von 32,768MHz, die der Frequenz des netzseitigen PCM-Taktsignals entspricht, erzeugt. Die kodierte Datenrate für die Übertragung über die Verbindungsleitung CC-LINK beträgt also 32,768Mbit, wodurch die effektive Datenrate für die Übertragung 16, 384Mbit beträgt. Die erzeugte Frequenz des Systemtaktsignals mclk wird der zweiten Zähleinrichtung COUNT2 sowie der ersten Schnittstelleneinrichtung SELIC1 zur Steuerung der Übertragung zugeführt. Weiterhin wird das Systemtaktsignal mclk der Sende/Empfangseinrichtung CU zugeführt und dort für die Erzeugung des lokalen Taktsignals lclk mit einer Frequenz von 26MHz in der Einrichtung LCLK verwendet. Die Einrichtung LCLK kann hierbei beispielsweise als ein analoger PLL-Schaltkreis verwirklicht sein, der ein hochgenaues lokales Taktsignal lclk erzeugt. Die Frequenz 26MHz des lokalen Taktsignals lclk ist so gewählt, daß hieraus alle Zeitbasen für das eingesetzte TDMA-Teilnehmerseparierungsverfahren des GSM-Mobilfunksystems abgeleitet werden können.

Die zweite Zähleinrichtung COUNT2 ist beispielsweise als ein l2bit-breiter binärer Zähler verwirklicht, und erzeugt bei jedem Zurücksetzen nach einem Überlauf einen neuen internen Zeitrahmen frameint. Die Länge eines jeweiligen internen Zeitrahmens frameint entspricht mit 125us (=8kHz) der Zeitrahmendauer des netzseitigen PCM-Signals. Die sukzessiv aufeinanderfolgenden internen Zeitrahmen frameint sind in der ersten Zeile des Zeitdiagramms der FIG 4 eingezeichnet.

Eine erste Zähleinrichtung COUNT1 erzeugt jeweils nach 480 gezählten internen Zeitrahmen frameint, welches einer Periodizität von 60ms entspricht, einen Synchronisierungsimpuls msync. Dieses ist in der zweiten Zeile des Zeitdiagramms der FIG 4 dargestellt, wobei die durchgehenden vertikalen Linien jeweils ein Auftreten eines Synchronisierungsimpulses msync kennzeichnen. Nach Erzeugen dieses Synchronisierungsimpulses msync wird die erste Zähleinrichtung COUNT1 zurückgesetzt und beginnt von neuen das Zählen der internen Zeitrahmen. Die Periodizität von 60ms für die Erzeugung des Synchronisierungsimpulses msync wurde gewählt, da diese 13 TDMA-Zeitrahmen, in der übrigen Beschreibung als externe Zeitrahmen frameext bezeichnet, zu je 4,615ms entspricht, und somit ein gemeinsames Vielfaches sowohl des internen frameint als auch des externen Zeitrahmens frameext darstellt.

Weiterhin zählt eine als 32bit-breiter Zähler ausgestaltete dritte Zähleinrichtung COUNT3 die internen Zeitrahmen frameint und ordnet ihnen jeweils eine interne Zeitrahmennummer fnint zu, wie es in der dritten Zeile des Zeitdiagramms dargestellt ist. Bei einer jeweiligen Erzeugung eines Synchronisierungsimpulses msync durch die erste Zähleinrichtung COUNT1 wird die jeweils aktuelle interne Zeitrahmennummer fnint gemeinsam mit dem Synchronisierungsimpuls msync zu der Sende/Empfangseinrichtung CU übertragen.

In der abgesetzten Sende/Empfangseinrichtung CU wird das erzeugte lokale Taktsignal lclk mittels einer vierten Zähleinrichtung COUNT4 für die Erzeugung von Zeitschlitzen ts mit einer jeweiligen Länge von ca. 577us verwendet. Diese Länge von 577us ergibt sich durch eine Teilung der Frequenz des lokalten Taktsignals lclk durch 15000, d.h. die vierte Zähleinrichtung COUNT4 besitzt eine Zählbreite von 15000. Eine sukzessive Folge der erzeugten Zeitschlitze ts 0 bis 7 ist in der vierten Zeile des Zeitdiagramms angegeben. Die Länge der Zeitschlitze ts ist durch das in dem GSM-Mobilfunksystem verwendete TDMA-Verfahren vorgegeben, wobei in einem Zeitschlitz ts jeweils Informationen zu/von einer Mobilstation MS, die sich in dem Funkversorgungsbereich der Basisstation BS befindet, übertragen werden.

Eine beispielsweise als 3bit-breiter binärer Zähler ausgestaltete fünfte Zähleinrichtung COUNT5 erzeugt periodisch aus jeweils acht sukzessiven Zeitschlitzen ts 0 bis 7 einen externen Zeitrahmen frameext, auch TDMA-Rahmen genannt, mit einer jeweiligen Länge von 4,615ms, wie er in der fünften Zeile des Zeitdiagramms angegeben ist.

Durch eine Rückführung der Ausgänge der vierten COUNT4 und fünften Zähleinrichtung COUNT5 zu der Synchronisierungseinrichtung SYNCGATE werden bei einem Auftreten des Synchronisierungsimpulses msync die jeweiligen Zeitlagen der erzeugten Zeitschlitze ts (vierte Zeile) und der externen Zeitrahmen frameext (fünfte Zeile) mit der Zeitlage des Synchronisierungsimpulses msync (zweite Zeile) verglichen. Die Zeitlagen müßten durch die spezifische Periodizität des Auftretens des Synchronisierungsimpulses msync identisch sein, jedoch werden Abweichung von der Synchronisierungseinrichtung SYNCGATE ausgeglichen, bzw. die Zeitlagen der Zeitschlitze ts und der externen Zeitrahmen frameext dem Synchronisierungsimpuls msync angepaßt. Diese Synchronisierungsprozedur ist durch jeweilige Pfeile zwischen der zweiten und der vierten Zeile des Zeitdiagramms dargestellt.

Eine sechste Zähleinrichtung COUNT6 zählt die erzeugten externen Zeitrahmen frameext und ordnet ihnen jeweils eine externe Zeitrahmennummer fnext zu, wie es in der fünften Zeile des Zeitdiagramms der FIG 4 dargestellt ist. Bei Auftreten eines Synchronisierungsimpulses msync liest die Recheneinrichtung MPC die gegebenenfalls in der zweiten Schnittstelleneinrichtung SELIC2 zwischengespeicherte interne Zeitrahmennummer fnint und die externe Zeitrahmennummer fnext aus und führt einen Vergleich zur Ermittlung einer eventuell aufgetretenen Differenz zwischen den Zeitrahmennummern durch. Aus der internen Zeitrahmennummer fnint berechnet die Recheneinrichtung MPC beispielsweise programmgesteuert eine theoretische externe Zeitrahmennummer, die sich beispielsweise basierend auf der Periodizität des erzeugten Synchronisierungsimpulses von 60ms durch eine Multiplikation der internen Zeitrahmennummer fnint mit 13 (für 13 externe Zeitrahmen frameext pro 60ms) und eine anschließende Division durch 480 (für 480 interne Zeitrahmen frameint pro 60ms) ergibt. Tritt eine Differenz zwischen den Zeitrahmennummern auf, so kann die Recheneinrichtung MPC beispielsweise die externe Zeitrahmennummer fnext der sechsten Zähleinrichtung COUNT6 korrigieren und entsprechend der theoretisch berechneten externen Zeitrahmennummer anpassen. Sowohl die dritte COUNT3 als auch die sechste Zähleinrichtung COUNT6 werden nach einem Überlauf der dritten Zähleinrichtung COUNT3 zurückgesetzt, was gemäß dem Zeitdiagramm einer Periodizität von ca. 3,5 Stunden entspricht.

Durch die mit einer Periodizität von 60ms durchgeführte Synchronisierung der Zeitlagen sowie der Zeitrahmennummern wird eine sehr hohe Synchronität zwischen der zentralen Baugruppe CORE und der Sende/Empfangseinrichtung CU mit einer Differenz kleiner der in dem GSM-Mobilfunksystem spezifizierten 932ns erreicht.

## Patentansprüche

1. Anordnung zur Synchronisierung zumindest einer abgesetzten Baugruppe (CU) mit einer zentralen Baugruppe (CORE), bei der
die zentrale Baugruppe (CORE) aufweist:
- eine Einrichtung (ACLK) zum Erzeugen eines Systemtaktsignals (mclk),
- eine erste Zähleinrichtung (COUNT1) zum periodischen Erzeugen eines Synchronisierungsimpulses (msync) aus dem Systemtaktsignal (mclk), wobei der Synchronisierungsimpuls (msync) mit einer Periodizität erzeugt wird, die einem ganzzahligen gemeinsamen Teiler einer Periodizität des Systemtaktsignals (mclk) und einer Periodizität eines in der abgesetzten Baugruppe (CU) erzeugten lokalen Taktsignals (lclk) entspricht, und
- eine erste Schnittstelleneinrichtung (SELIC1) zum Senden von Informationen und des Synchronisierungsimpulses (msync) über zumindest eine Verbindungsleitung (CC-LINK) zu der abgesetzten Baugruppe (CU),
und die abgesetzte Baugruppe (CU) aufweist:
- eine Einrichtung (LCLK) zum Erzeugen des lokalen Taktsignals (lclk),
- eine zweite Schnittstelleneinrichtung (SELIC2) zum Empfangen der über die Verbindungsleitung (CC-LINK) übertragenen Informationen und des Synchronisierungsimpulses (msync), und
- eine Synchronisierungseinrichtung (SYNCGATE) zum Ermitteln einer jeweiligen Differenz zwischen einer Zeitlage des empfangenen Synchronisierungsimpulses (msync) und einer Zeitlage des lokalen Taktsignals (lclk), und zum Steuern der Zeitlage des lokalen Taktsignals (lclk) im Verhältnis zu der Zeitlage des Synchronisierungsimpulses (msync).

2. Anordnung nach Anspruch 1, bei der die Synchronisierungseinrichtung (SYNCGATE) die Zeitlage des lokalen Taktsignals (lclk) derart steuert, daß die Differenz minimal ist.

3. Anordnung nach Anspruch 1, bei der die Synchronisierungseinrichtung (SYNCGATE) die Zeitlage des lokalen Taktsignals (lclk) derart steuert, daß die Differenz abhängig von einer Länge der Verbindungsleitung (CC-LINK) konstant ist.

4. Anordnung nach einem der vorhergehenden Ansprüche, bei der die Synchronisierungseinrichtung (SYNCGATE) den Vergleich der Zeitlagen nur in bestimmten Zeitintervallen durchführt.

5. Anordnung nach einem der vorhergehenden Ansprüche, bei der die zentrale Baugruppe (CORE) eine zweite Zähleinrichtung (COUNT2) zum periodischen Erzeugen eines aus einer jeweiligen Anzahl von Informationselementen (bit) bestehenden internen Zeitrahmens (frameint) für die Informationsübertragung zu der abgesetzten Baugruppe (CU) abhängig von der Periodizität des Systemtaktsignals (mclk) aufweist.

6. Anordnung nach Anspruch 5, bei der die erste Zähleinrichtung (COUNT1) den Synchronisierungsimpuls (msync) periodisch nach jeweils einer bestimmten Anzahl in der zweiten Zähleinrichtung (COUNT2) erzeugter interner Zeitrahmen (frameint) erzeugt.

7. Anordnung nach Anspruch 5 oder 6, bei der eine dritte Zähleinrichtung (COUNT3), die in der zentralen Baugruppe (CORE) verwirklicht ist, die erzeugten internen Zeitrahmen (frameint) zählt und jeweils einer internen Zeitrahmennummer (fnint) zuordnet.

8. Anordnung nach Anspruch 7, bei der die erste Schnittstelleneinrichtung (SELIC1) der zentralen Baugruppe (CORE) die interne Zeitrahmennummer (fnint) gemeinsam mit dem Synchronisierungsimpuls (msync) zu der abgesetzten Baugruppe (CU) überträgt.

9. Anordnung nach Anspruch 5 oder 7, bei der die erste Schnittstelleneinrichtung (SELIC1) der zentralen Baugruppe (CORE) ein oder mehrere Informationselemente (bit) durch den erzeugten Synchronisierungsimpuls (msync) und/oder die interne Zeitrahmennummer (fnint) ersetzt und zu der zweiten Schnittstelleneinrichtung (SELIC2) in der abgesetzten Baugruppe (CU) überträgt.

10. Anordnung nach Anspruch 7, bei der eine vierte Zähleinrichtung (COUNT4), die in der abgesetzten Baugruppe (CU) verwirklicht ist, abhängig von der Periodizität des lokalen Taktsignals (lclk) Zeitschlitze (ts) mit jeweils einer bestimmten Anzahl von Informationselementen (bit) für eine Informationsübertragung zu zumindest einer weiteren externen Einrichtungen (MS) erzeugt.

11. Anordnung nach Anspruch 10, bei der eine fünfte Zähleinrichtung (COUNT5), die in der abgesetzten Baugruppe (CU) verwirklicht ist, jeweils aus einer bestimmten Anzahl Zeitschlitze (ts) einen externen Zeitrahmen (frameext) erzeugt.

12. Anordnung nach Anspruch 10 oder 11, bei der eine sechste Zähleinrichtung (COUNT6), die in der abgesetzten Baugruppe (CU) verwirklicht ist, die externen Zeitrahmen (frameext) zählt und jeweils einer externen Zeitrahmennummer (fnext) zuordnet.

13. Anordnung nach Anspruch 12, bei der eine Recheneinrichtung (MPC), die in der abgesetzten Baugruppe (CU) verwirklicht ist, die übertragene interne Zeitrahmennummer (fnint) mit der externen Zeitrahmennummer (fnext) vergleicht, eine Differenz der jeweiligen Zeitrahmennummern (fnint, fnext) ermittelt und die externe Zeitrahmennummer (fnext) im Verhältnis zu der zentralen Zeitrahmennummer (fnint) verändert.

14. Anordnung nach Anspruch 13, bei der die Recheneinrichtung (MPC) die ermittelte Differenz der Zeitrahmennummern (fnint, fnext) minimiert.

15. Anordnung nach Anspruch 13 oder 14, bei der die Recheneinrichtung (MPC) aus der internen Zeitrahmennummer (fnint) entsprechend dem Verhältnis zwischen der Periodizität der Erzeugung der internen Zeitrahmen (frameint) und der Periodizität der Erzeugung der externen Zeitrahmen (frameext) eine theoretische externe Zeitrahmennummer berechnet, und die theoretische externe Zeitrahmennummer mit der in der sechsten Zähleinrichtung (COUNT6) ermittelten externen Zeitrahmennummer (fnext) vergleicht.

16. Anordnung nach Anspruch 15, bei der die Recheneinrichtung (MPC) der externen Zeitrahmennummer (fnext) die berechnete theoretische externe Zeitrahmennummer zuordnet.

17. Anordnung nach Anspruch 1, bei der die Verbindungszuleitung (CC-LINK) als eine individuelle Zuleitung zu einer jeweils abgesetzten Baugruppe (CU) verwirklicht ist.

18. Anordnung nach Anspruch 1, bei der die Einrichtung (LCLK) zum Erzeugen des lokalen Taktsignals (lclk) derart ausgestaltet ist, daß das lokale Taktsignal (lclk) aus dem Systemtaktsignal (mclk) abgeleitet wird.

19. Anordnung nach Anspruch 1 order 10, bei der die zentrale Baugruppe (CORE) und die abgesetzte Baugruppe (CU) in einer Basisstation (BS) eines Funk-Kommunikationssystems verwirklicht sind.

20. Anordnung nach Anspruch 19, bei der das Funk-Kommunikationssystem eine Teilnehmerseparierung gemäß einem TDMA-Verfahren durchführt, wobei die Länge des externen Zeitschlitzes (ts) und des externen Zeitrahmens (frameext) entsprechend dem TDMA-Verfahren angepaßt sind.

21. Anordnung nach Anspruch 19 oder 20, bei der die abgesetzte Baugruppe (CU) als eine Sende-/Empfangseinrichtung der Basisstation (BS) verwirklicht sind.

22. Anordnung nach einem der Ansprüche 19 bis 21, bei der die weiteren Einrichtungen (MS) als Mobilstationen oder ortsfeste Teilnehmerendgeräte des Funk-Kommunikationssystems verwirklicht sind.

## Revendications

1. Dispositif pour la synchronisation d'au moins un ensemble électronique à distance (CU) avec un ensemble électronique central (CORE), dans lequel
l'ensemble électronique central (CORE) est pourvu :
- d'un dispositif (ACLK) pour produire un signal d'horloge de système (mclk),
- d'un premier dispositif de comptage (COUNT1) pour la génération périodique d'une impulsion de synchronisation (msync) à partir du signal d'horloge de système (mclk), l'impulsion de synchronisation (msync) étant générée avec une périodicité correspondant à un diviseur commun entier d'une périodicité du signal d'horloge de système (mclk) et d'une périodicité d'un signal d'horloge locale (lclk) produit dans l'ensemble électronique à distance (CU) et
- d'un premier dispositif d'interface (SELIC1) pour l'envoi d'informations et de l'impulsion de synchronisation (msync) vers l'ensemble électronique à distance (CU) par le biais d'au moins une ligne de connexion (CC-LINK),
et l'ensemble électronique à distance (CU) est pourvu :
- d'un dispositif (LCLK) pour la production du signal d'horloge locale (lclk),
- d'un second dispositif d'interface (SELIC2) pour la réception des informations transmises par le biais de la ligne de connexion (CC-LINK) et de l'impulsion de synchronisation (msync) et
- d'un dispositif de synchronisation (SYNCGATE) pour déterminer une différence respective entre une position temporelle de l'impulsion de synchronisation (msync) reçue et une position temporelle du signal d'horloge locale (lclk), et pour commander la position temporelle du signal d'horloge locale (lclk) par rapport à la position temporelle de l'impulsion de synchronisation (msync).

2. Dispositif selon la revendication 1, dans lequel le dispositif de synchronisation (SYNCGATE) commande la position temporelle du signal d'horloge locale (lclk) de manière à ce que la différence soit minimale.

3. Dispositif selon la revendication 1, dans lequel le dispositif de synchronisation (SYNCGATE) commande la position temporelle du signal d'horloge locale (lclk) de manière à ce que la différence soit constante en fonction d'une longueur de la ligne de connexion (CC-LINK).

4. Dispositif selon l'une des revendications précédentes, dans lequel le dispositif de synchronisation (SYNCGATE) procède à la comparaison des positions temporelles uniquement dans des intervalles de temps déterminés.

5. Dispositif selon l'une des revendications précédentes, dans lequel l'ensemble électronique central (CORE) est pourvu d'un deuxième dispositif de comptage (COUNT2) pour la production périodique d'une trame temporelle interne (frameint) formée d'un nombre respectif d'éléments d'information (bit) pour la transmission d'informations vers l'ensemble électronique à distance (CU) en fonction de la périodicité du signal d'horloge de système (mclk).

6. Dispositif selon la revendication 5, dans lequel le premier dispositif de comptage (COUNT1) génère l'impulsion de synchronisation (msync) de manière périodique après un nombre déterminé respectif de trames temporelles internes (frameint) produites dans le deuxième dispositif de comptage (COUNT2).

7. Dispositif selon la revendication 5 ou 6, dans lequel un troisième dispositif de comptage (COUNT3), réalisé dans l'ensemble électronique central (CORE), compte les trames temporelles internes (frameint) produites et les associe respectivement à un numéro de trame temporelle interne (fnint).

8. Dispositif selon la revendication 7, dans lequel le premier dispositif d'interface (SELIC1) de l'ensemble électronique central (CORE) transmet le numéro de trame temporelle interne (fnint) à l'ensemble électronique à distance (CU) en même temps que l'impulsion de synchronisation (msync).

9. Dispositif selon la revendication 5 ou 7, dans lequel le premier dispositif d'interface (SELIC1) de l'ensemble électronique central (CORE) remplace un ou plusieurs élément/s d'information (bit) par l'impulsion de synchronisation (msync) produite et/ou le numéro de trame temporelle interne (fnint) et les transmet vers le second dispositif d'interface (SELIC2) dans l'ensemble électronique à distance (CU).

10. Dispositif selon la revendication 7, dans lequel un quatrième dispositif de comptage (COUNT4) réalisé dans l'ensemble électronique à distance (CU) produit, en fonction de la périodicité du signal d'horloge locale (lclk), des intervalles de temps (ts) contenant à chaque fois un nombre déterminé d'éléments d'information (bit) pour une transmission d'informations vers au moins un autre dispositif externe (MS).

11. Dispositif selon la revendication 10, dans lequel un cinquième dispositif de comptage (COUNT5), réalisé dans l'ensemble électronique à distance (CU), produit à chaque fois une trame temporelle externe (frameext) à partir d'un nombre déterminé d'intervalles de temps (ts).

12. Dispositif selon la revendication 10 ou 11, dans lequel un sixième dispositif de comptage (COUNT6), réalisé dans l'ensemble électronique à distance (CU), compte les trames temporelles externes (frameext) et les associe respectivement à un numéro de trame temporelle externe (fnext).

13. Dispositif selon la revendication 12, dans lequel un dispositif de calcul (MPC), réalisé dans l'ensemble électronique à distance (CU), compare le numéro de trame temporelle interne (fnint) transmis avec le numéro de trame temporelle externe (fnext), détermine une différence entre les numéros de trame temporelle respectifs (fnint, fnext) et modifie le numéro de trame temporelle externe (fnext) par rapport au numéro de trame temporelle centrale (fnint).

14. Dispositif selon la revendication 13, dans lequel le dispositif de calcul (MPC) minimise la différence déterminée entre les numéros de trame temporelle (fnint, fnext).

15. Dispositif selon la revendication 13 ou 14, dans lequel le dispositif de calcul (MPC) calcule un numéro de trame temporelle externe théorique à partir du numéro de trame temporelle interne (fnint), selon le rapport entre la périodicité de la production des trames temporelles internes (frameint) et la périodicité de la production des trames temporelles externes (frameext), et compare le numéro de trame temporelle externe théorique avec le numéro de trame temporelle externe (fnext) déterminé dans le sixième dispositif de comptage (COUNT6).

16. Dispositif selon la revendication 15, dans lequel le dispositif de calcul (MPC) affecte le numéro de trame temporelle externe théorique calculé au numéro de trame temporelle externe (fnext).

17. Dispositif selon la revendication 1, dans lequel la ligne de connexion (CC-LINK) est réalisée en tant que ligne d'arrivée individuelle vers un ensemble électronique à distance (CU) respectif.

18. Dispositif selon la revendication 1, dans lequel le dispositif (LCLK) pour produire le signal d'horloge locale (lclk) est exécuté de manière à ce que le signal d'horloge locale (lclk) soit dérivé du signal d'horloge de système (mclk).

19. Dispositif selon la revendication 1 ou 10, dans lequel l'ensemble électronique central (CORE) et l'ensemble électronique à distance (CU) sont réalisés dans une station de base (BS) d'un système de radiocommunication.

20. Dispositif selon la revendication 19, dans lequel le système de radiocommunication exécute une séparation d'abonnés selon un procédé TDMA, la longueur de l'intervalle de temps externe (ts) et de la trame temporelle externe (frameext) étant adaptée conformément au procédé TDMA.

21. Dispositif selon la revendication 19 ou 20, dans lequel l'ensemble électronique à distance (CU) est réalisé en tant que dispositif émetteur/récepteur de la station de base (BS).

22. Dispositif selon l'une des revendications 19 à 21, dans lequel les autres dispositifs (MS) sont réalisés en tant que stations mobiles ou terminaux d'abonnés fixes du système de radiocommunication.

## Claims

1. Arrangement for synchronising at least one remote module (CU) with a central module (CORE), in which
the central module (CORE) has:
- a facility (ACLK) for generating a system timing signal (mclk),
- a first counting facility (COUNT1) for periodic generation of a synchronisation pulse (msync) from the system timing signal (mclk), with the synchronisation pulse (msync) being generated with a periodicity, which corresponds to a common integer divisor of a periodicity of the system timing signal (mclk) and a periodicity of a local timing signal (lclk) generated in the remote module (CU) and
- a first interface facility (SELIC1) for sending information and the synchronisation pulse (msync) via at least one connecting line (CC-LINK) to the remote module (CU)
and the remote module (CU) has:
- a facility (LCLK) for generating the local timing signal (lclk),
- a second interface facility (SELIC2) for receiving the information and synchronisation pulse (msync) transmitted via the connecting line (CC-LINK) and
- a synchronisation facility (SYNCGATE) for determining a respective difference between a time position of the received synchronisation pulse (msync) and a time position of the local timing signal (lclk) and for controlling the time position of the local timing signal (lclk) in relation to the time position of the synchronisation pulse (msync).

2. Arrangement according to claim 1, in which the synchronisation facility (SYNCGATE) controls the time position of the local timing signal (lclk) such that the difference is minimal.

3. Arrangement according to claim 1, in which the synchronisation facility (SYNCGATE) controls the time position of the local timing signal (lclk) such that the difference is constant as a function of the length of the connecting line (CC-LINK).

4. Arrangement according to one of the preceding claims, in which the synchronisation facility (SYNCGATE) only carries out the comparison of time positions at specified time intervals.

5. Arrangement according to one of the preceding claims, in which the central module (CORE) has a second counting facility (COUNT2) for the periodic generation of an internal time frame (frameint) comprising a respective number of information elements (bit) for the transmission of information to the remote module (CU) as a function of the periodicity of the system timing signal (mclk).

6. Arrangement according to claim 5, in which the first counting facility (COUNT1) generates the synchronisation pulse (msync) periodically after a specified number of internal time frames (frameint) generated in the second counting facility (COUNT2) in each instance.

7. Arrangement according to claim 5 or 6, in which a third counting facility (COUNT3), which is realised in the central module (CU), counts the generated internal time frames (frameint) and assigns them respectively to an internal time frame number (fnint).

8. Arrangement according to claim 7, in which the first interface facility (SELIC1) of the central module (CORE) transmits the internal time frame number (fnint) together with the synchronisation pulse (msync) to the remote module (CU).

9. Arrangement according to claim 5 or 7, in which the first interface facility (SELIC1) of the central module (CORE) replaces one or more information elements (bit) with the generated synchronisation pulse (msync) and/or replaces the internal time frame number (fnint) and transmits it/them to the second interface facility (SELIC2) in the remote module (CU).

10. Arrangement according to claim 7, in which a fourth counting facility (COUNT4), realised in the remote module (CU), generates time slots (ts) each with a specified number of information elements (bit) as a function of the periodicity of the local timing signal (lclk) for the transmission of information to at least one further external facility (MS).

11. Arrangement according to claim 10, in which a fifth counting facility (COUNT5), realised in the remote module (CU), generates an external time frame (frameext) respectively from a specified number of time slots (ts).

12. Arrangement according to claim 10 or 11, in which a sixth counting facility (COUNT6), realised in the remote module (CU), counts the external time frames (frameext) and assigns them respectively to an external time frame number (fnext).

13. Arrangement according to claim 12, in which a computation facility (MPC), realised in the remote module (CU), compares the transmitted internal time frame number (fnint) with the external time frame number (fnext), determines a difference between the respective time frame numbers (fnint, fnext) and modifies the external time frame number (fnext) in relation to the central time frame number (fnint).

14. Arrangement according to claim 13, in which the computation facility (MPC) minimises the difference determined between the time frame numbers (fnint, fnext).

15. Arrangement according to claim 13 or 14, in which the computation facility (MPC) uses the internal time frame number (fnint) to calculate a theoretical external time frame number based on the relationship between the periodicity of the generation of internal time frames (frameint) and the periodicity of the generation of external time frames (frameext) and compares the theoretical external time frame number with the external time frame number (fnext) determined in the sixth counting facility (COUNT6).

16. Arrangement according to claim 15, in which the computation facility (MPC) assigns the calculated theoretical external time frame number to the external time frame number (fnext).

17. Arrangement according to claim 1, in which the connecting line (CC-LINK) is realised as an individual supply line to a respectively remote module (CU).

18. Arrangement according to claim 1, in which the facility (LCLK) for generating the local timing signal (lclk) is configured such that the local timing signal (lclk) is derived from the system timing signal (mclk).

19. Arrangement according to claim 1 or 10, in which the central module (CORE) and the remote module (CU) are realised in a base station (BS) of a radio communication system.

20. Arrangement according to claim 19, in which the radio communication system carries out user separation according to a TDMA method, with the lengths of the external time slot (ts) and the external time frame (frameext) being tailored according to the TDMA method.

21. Arrangement according to claim 19 or 20, in which the remote module (CU) is realised as a transmit/receive unit of the base station (BS).

22. Arrangement according to one of claims 19 to 21, in which the further facilities (MS) are realised as mobile stations or fixed-location user terminals of the radio communication system.
